# EUROPEAN PATENT APPLICATION

(11) **EP 3 561 998 A1**
(43) Date of publication of application: **30.10.2019**
(21) Application number: 17883171.5
(22) Date of filing: 28.11.2017
(51) Int. Cl.: H02K 1/14, B62J 6/12, H02K 21/22

(54) **HUB DYNAMO**

(30) Priority: 21.12.2016 JP 2016248242
(71) Applicant: Mitsuba Corporation, Kiryu-shi Gunma 376-8555 (JP)
(72) Inventor: CHIKARAISHI Makoto, Kiryu-shi Gunma 376-8555 (JP); TAKASE Junichi, Kiryu-shi Gunma 376-8555 (JP); NAKANISHI Takashi, Kiryu-shi Gunma 376-8555 (JP); TANABE Takuto, Kiryu-shi Gunma 376-8555 (JP)
(74) Representative: Cabinet Laurent & Charras
(86) International application number: PCT/JP2017/042590
(87) International publication number: WO 2018/116758

(57) **Abstract**

Each of a first yoke (120A) and a second yoke (120B) is disposed on a plane inclined with respect to a radial direction, and a distal end (123a) of an inner circumferential side magnetic pole part (123) of the first yoke and a distal end (123a) of an inner circumferential side magnetic pole part (123) of the second yoke are brought into contact with each other on an intersection line (SC) of a first yoke actual disposition plane (SA1) and a second yoke actual disposition plane (SB1).

## Description

### [Technical Field]

The present invention relates to a hub dynamo.

Priority is claimed on Japanese Patent Application No. 2016-248242, filed December 21, 2016, the content of which is incorporated herein by reference.

### [Background Art]

In order to supply electric power to headlamps, taillights, or the like of bicycles, electric generators that generate electric power due to rotation of a wheel are widely used. While there are structures of various types for such electric generators, a so-called hub dynamo attached to a hub axle is known.

Generally, a hub dynamo is equipped with a rotor having a permanent magnet on a wheel side. Then, when the rotor rotates around a stator provided on a hub axle side, a coil provided in the stator generates electric power.

As a stator in the hub dynamo, a stator in which a plurality of first yokes and a plurality of second yokes are respectively disposed on one axial side and the other axial side of a coil bobbin around which a coil is wound is known. As a stator, a claw-pole type in which first yokes and second yokes are assembled to a coil bobbin such that a first yoke outer circumferential side magnetic pole part (teeth part) and a second yoke outer circumferential side magnetic pole part (teeth part) are alternately aligned in a circumferential direction is known.

For example, in the hub dynamo described in Patent Literature 1, each of a first yoke and a second yoke is formed as a laminated yoke in which a plurality of flat plate-shaped members made of a magnetic material are laminated in a direction perpendicular to a radial direction of a coil. Each yoke has a C shape when seen at a side view.

That is, the first yoke has a C shape in a side view having an outer circumferential side magnetic pole part, an inner circumferential side magnetic pole part, and a connecting part. The outer circumferential side magnetic pole part is positioned on an outer circumferential side of the coil and a distal end thereof reaches from one axial end side to the other axial end side of the coil. The inner circumferential side magnetic pole part is positioned on an inner circumferential side of the coil and a distal end thereof reaches from one axial end side to an intermediate position toward the other axial end side of the coil. The connecting part linearly extends in a radial direction at one axial end side of the coil and connects base ends of the outer circumferential side magnetic pole part and the inner circumferential side magnetic pole part.

Also, the second yoke has a C shape in a side view having an outer circumferential side magnetic pole part, an inner circumferential side magnetic pole part, and a connecting part. The outer circumferential side magnetic pole part is positioned on an outer circumferential side of the coil and a distal end thereof reaches from the other axial end side to one axial end side of the coil. The inner circumferential side magnetic pole part is positioned on an inner circumferential side of the coil and a distal end thereof reaches from the other axial end side to an intermediate position toward one axial end side of the coil. The connecting part linearly extends in the radial direction at the other axial end side of the coil and connects base ends of the outer circumferential side magnetic pole part and the inner circumferential side magnetic pole part.

Then, the distal end of the inner circumferential side magnetic pole part of the first yoke and the distal end of the inner circumferential side magnetic pole part of the second yoke are brought into contact with each other on the inner circumferential side of the coil. Thereby, the first yoke and the second yoke are magnetically connected.

The first yoke and the second yoke are alternately aligned in the circumferential direction and are disposed radially in the radial direction when viewed from a center of the coil. Accordingly, positions of the inner circumferential side magnetic pole parts of the first yoke and second yoke adjacent to each other are deviated from each other in the circumferential direction. Therefore, even when the inner circumferential side magnetic pole parts of the first yoke and the second yoke are disposed close to each other in the circumferential direction, the distal end of the inner circumferential side magnetic pole part of one first yoke comes into bridging contact with the distal ends of the inner circumferential side magnetic pole parts of two second yokes adjacent thereto. Similarly, the distal end of the inner circumferential side magnetic pole part of one second yoke comes into bridging contact with the distal ends of the inner circumferential side magnetic pole parts of two first yokes adjacent thereto. That is, the inner circumferential side magnetic pole part of the first yoke and the inner circumferential side magnetic pole part of the second yoke come into contact with each other in a one-to-two relationship.

### [Citation List]

### [Patent Literature]

[Patent Literature 1]
Japanese Patent No. 5357937

### [Summary of Invention]

### [Technical Problem]

When a stator of the hub dynamo is actually assembled, a first yoke is inserted from one axial side and a second yoke is inserted from the other axial side with respect to a coil bobbin. At this time, for example, between inner circumferential side magnetic pole parts of two second yokes with which a distal end of an inner circumferential side magnetic pole part of the first yoke comes into contact, when an insertion direction dimension of an inner circumferential side magnetic pole part of one of the second yokes is shorter than an insertion direction dimension of an inner circumferential side magnetic pole part of the other second yoke (that is, when a variation occurs in insertion direction dimensions of the inner circumferential side magnetic pole parts of the two adjacent second yokes), the following is possible.

That is, the distal end of the inner circumferential side magnetic pole part of the first yoke comes into contact only with a distal end of the inner circumferential side magnetic pole part of one of the second yokes having a longer insertion direction dimension and does not come into contact with a distal end of the inner circumferential side magnetic pole part of the other second yoke, and thus a gap may be formed between the distal end of the inner circumferential side magnetic pole part of the first yoke and the distal end of the inner circumferential side magnetic pole part of the other second yoke. In this manner, when a gap is formed at an abutting portion between yokes due to a variation on a contact surface caused by a dimensional tolerance or the like, iron loss of the yoke may increase and the performance may deteriorate.

The present invention provides a hub dynamo in which a dimensional variation of yokes can be absorbed so that a gap on a contact surface between the yokes is not formed, thereby improving the performance.

### [Solution to Problem]

According to one aspect of the present invention, a hub dynamo includes a rotor having a hub shell rotating together with a wheel, and a permanent magnet circumferentially disposed in an inner circumference of a body part of the hub shell, and a stator which is non-rotatably fixed to a hub axle rotatably supporting the wheel, disposed on an inner circumferential side of the permanent magnet in a state of being accommodated inside the hub shell, and including a ring-shaped coil that outputs an alternating current due to rotation of the rotor, in which the stator includes a plurality of first yokes and a plurality of second yokes as a stator core disposed on one axial side and the other axial side to surround the ring-shaped coil, radially disposed at intervals in a circumferential direction, and alternately disposed in the circumferential direction, in which each of the first yokes includes an outer circumferential side magnetic pole part which is positioned on an outer circumferential side of the coil and whose distal end reaches from one axial end side to the other axial end side of the coil, an inner circumferential side magnetic pole part which is positioned on an inner circumferential side of the coil and whose distal end reaches from one axial end side to an intermediate position toward the other axial end side of the coil, and a connecting part linearly extending at one axial end side of the coil and connecting base ends of the outer circumferential side magnetic pole part and the inner circumferential side magnetic pole part, and each of the second yokes includes an outer circumferential side magnetic pole part which is positioned on an outer circumferential side of the coil and whose distal end reaches from the other axial end side to one axial end side of the coil, an inner circumferential side magnetic pole part which is positioned on an inner circumferential side of the coil and whose distal end reaches from the other axial end side to an intermediate position toward one axial end side of the coil, and a connecting part linearly extending at the other axial end side of the coil and connecting base ends of the outer circumferential side magnetic pole part and the inner circumferential side magnetic pole part, the first yoke and the second yoke are formed as a laminated yoke in which a plurality of flat plate-shaped members made of a magnetic material are laminated, the first yoke and the second yoke are disposed such that a disposition position of the first yoke and a disposition position of the second yoke are alternately on an outer circumferential surface of the stator at intervals in the circumferential direction, a plane including a central axis of the hub axle and a circumferential center on an outer circumferential surface side of the outer circumferential side magnetic pole part of the first yoke is a first yoke disposition reference plane and a plane inclined to one circumferential side with respect to the first yoke disposition reference plane may be a first yoke actual disposition plane so that the first yoke is disposed on the first yoke actual disposition plane, a plane including the central axis of the hub axle and a circumferential center on an outer circumferential surface side of the outer circumferential side magnetic pole part of the second yoke may be a second yoke disposition reference plane and a plane inclined to the other circumferential side with respect to the second yoke disposition reference plane may be a second yoke actual disposition plane so that the second yoke is disposed on the second yoke actual disposition plane, and the distal end of the inner circumferential side magnetic pole part of the first yoke and the distal end of the inner circumferential side magnetic pole part of the second yoke are in contact with each other on an intersection line of the first yoke actual disposition plane and the second yoke actual disposition plane.

In this case, the yoke is disposed not on a plane in the radial direction but on a plane inclined with respect to the radial direction (actual disposition plane of the yoke). Therefore, the inner circumferential side magnetic pole part of the first yoke and the inner circumferential side magnetic pole part of the second yoke can be brought into contact with each other in a one-to-one relationship. Accordingly, a gap formed on a contact surface between the first yoke and the second yoke due to a variation caused by a dimensional tolerance or the like of the yokes can be eliminated, and a degree of close contact of the contact surface can be increased. As a result, magnetic connection of the yokes can be stabilized and thus iron loss can be reduced. Since the connection between the first yoke and the second yoke can be made in a one-to-one relationship, when an output is adjusted downward from a 100% state to, for example, 75%, 50%, or 25%, the number of first yokes and second yokes need only be reduced by an equivalent number. Therefore, the number of required yokes can be reduced.

According to a second aspect of the present invention, in the hub dynamo according to the first aspect of the present invention, the stator may include a coil bobbin made of a non-magnetic material, in which the coil bobbin may have a cylindrical body part around which the coil is wound, and a first flange and a second flange provided on outer circumferences of both axial ends of the body part, a guide part with which one axial end portion of the first yoke is engaged to position the first yoke on the first yoke actual disposition plane may be provided on the first flange, and a guide part with which the other axial end portion of the second yoke is engaged to position the second yoke on the second yoke actual disposition plane may be provided on the second flange.

In this case, when one axial end portion of the first yoke is engaged with the guide part of the first flange of the coil bobbin, the first yoke can be positioned on the first yoke actual disposition plane. Also, when one axial end portion of the second yoke is engaged with the guide part of the second flange of the coil bobbin, the second yoke can be positioned on the second yoke actual disposition plane. Accordingly, when the first yoke and the second yoke are assembled to the coil bobbin, a positional relationship between the coil wound around the coil bobbin and the yokes can be appropriately determined.

According to a third aspect of the present invention, in the hub dynamo according to the second aspect of the present invention, the guide part may include a first yoke connecting part guide groove provided on an axial end portion of the first flange and to which the connecting part of the first yoke is fitted so that the first yoke is positioned on the first yoke actual disposition plane, and a second yoke connecting part guide groove provided on an axial end portion of the second flange and to which the connecting part of the second yoke is fitted so that the second yoke is positioned on the second yoke actual disposition plane.

In this case, when the connecting parts of the yokes are respectively fitted to the first yoke connecting part guide groove and the second yoke connecting part guide groove provided at the axial end portions of the coil bobbin, the yokes can be assembled to the coil bobbin while positioning the yokes appropriately.

According to a fourth aspect of the present invention, in the hub dynamo according to the second or third aspect of the present invention, the guide part may include a first yoke outer circumferential side guide groove provided on an outer circumferential surface of the first flange and to which the outer circumferential side magnetic pole part of the first yoke is fitted so that the first yoke is positioned on the first yoke actual disposition plane, and a second yoke outer circumferential side guide groove provided on an outer circumferential surface of the second flange and to which the outer circumferential side magnetic pole part of the second yoke is fitted so that the second yoke is positioned on the second yoke actual disposition plane.

In this case, when the outer circumferential side magnetic pole parts of the yokes are respectively fitted to the first yoke outer circumferential side guide groove and the second yoke outer circumferential side guide groove provided on the outer circumferential surfaces of the coil bobbin, the yokes can be assembled to the coil bobbin while positioning the yokes appropriately.

According to a fifth aspect of the present invention, in the hub dynamo according to any one of the first to fourth aspects of the present invention, when an inclination direction of the first yoke actual disposition plane with respect to the first yoke disposition reference plane and an inclination direction of the second yoke actual disposition plane with respect to the second yoke disposition reference plane are respectively defined as inclination directions of the yokes, a position of an outer circumferential end in the radial direction of the laminated plate-shaped member positioned on a rear side in the inclination direction of each of the first yoke and the second yoke may protrude outward in the radial direction with respect to a position of an outer circumferential end in the radial direction of the laminated plate-shaped member positioned on a front side in the inclination direction of each of the first yoke and the second yoke.

In this case, a gap (air gap) between an outer circumferential edge of each of the first yoke and the second yoke (outer circumferential edge of the outer circumferential side magnetic pole part of each yoke) laminated with a plurality of plate-shaped members and an inner circumferential surface of the permanent magnet can be made uniform.

That is, when the yokes are disposed to be inclined with respect to the radial direction, a position of the outer circumferential end in the radial direction of the laminated plate-shaped member positioned on the rear side in the inclination direction of the yokes is formed to be recessed toward a radial inner side with respect to a position of the outer circumferential end in the radial direction of the laminated plate-shaped member positioned on the front side in the inclination direction. In other words, a gap (air gap) between the outer circumferential end in the radial direction of the laminated plate-shaped member and an inner circumference of the permanent magnet at a position on the rear side in the inclination direction is larger than a gap (air gap) between the outer circumferential end in the radial direction of the laminated plate-shaped member and the inner circumference of the permanent magnet at a position on the front side in the inclination direction, and thus a deviation occurs between the air gaps.

Therefore, as described above, the position of the outer circumferential end in the radial direction of the laminated plate-shaped member positioned on the rear side in the inclination direction of each yoke is caused to protrude outward in the radial direction with respect to the position of the outer circumferential end in the radial direction of the laminated plate-shaped member positioned on the front side in the inclination direction of each yoke. That is, a dimension of the outer circumferential edge of the yoke on a surface facing the permanent magnet is adjusted. Thereby, the gap (air gap) between the outer circumferential edges of each yoke and the inner circumferential surface of the permanent magnet can be made uniform. As a result, power generation efficiency can be improved.

As a method of making a position of the outer circumferential end in the radial direction of the laminated plate-shaped member positioned on the rear side in the inclination direction of each yoke protrude outward in the radial direction with respect to a position of the outer circumferential end in the radial direction of the laminated plate-shaped members positioned on the front side in the inclination direction of each yoke, a method in which dimensions of the plate-shaped members laminated on the front side and the rear side in the inclination direction are made different can be employed. In addition, a method can be employed in which lamination positions of the plate-shaped members laminated on the front side and the rear side in the inclination direction are deviated.

According to a sixth aspect of the present invention, in the hub dynamo according to any one of the first to fifth aspects of the present invention, a notch part may be provided on at least one of one end side and the other end side in the circumferential direction of an inner circumferential end of the first yoke and the second yoke to avoid interference with an inner circumferential end of another first yoke and second yoke adjacent thereto in the circumferential direction.

In this case, interference between the inner circumferential parts of the yokes adjacent to each other can be avoided, and thus the yokes can be disposed close to each other in the circumferential direction. That is, when the yokes are radially disposed, the inner circumferential parts of adjacent yokes interfere with each other, and the number of disposed yokes may be restricted. Therefore, when the notch part for avoiding the interference as described above is provided, the number of disposed yokes can be increased.

### [Advantageous Effects of Invention]

According to the hub dynamo according to the present invention, the yoke is disposed not on a plane in the radial direction but on a plane inclined with respect to the radial direction (actual disposition plane of the yoke). Therefore, the inner circumferential side magnetic pole part of the first yoke and the inner circumferential side magnetic pole part of the second yoke can be brought into contact with each other in a one-to-one relationship. Accordingly, a gap formed on a contact surface between the first yoke and the second yoke due to a variation caused by a dimensional tolerance or the like of the yokes can be eliminated, and thereby a degree of close contact of the contact surface can be increased. As a result, magnetic connection of the yokes can be stabilized and thus iron loss can be reduced. Further, since the connection between the first yoke and the second yoke can be made in a one-to-one relationship, when an output is adjusted downward from a 100% state to 75%, 50%, or 25%, the number of first yokes and second yokes need only be reduced by an equivalent number, and thus the required number of yokes can be reduced. Therefore, the present invention can contribute to weight reduction and reduction in costs of the hub dynamo.

### [Brief Description of Drawings]

Fig. 1 is a schematic attachment view of a hub dynamo of an embodiment of the present invention.
Fig. 2 is a side view of the hub dynamo of the embodiment of the present invention.
Fig. 3 is a cross-sectional view of the hub dynamo of the embodiment of the present invention.
Fig. 4 is a perspective view of a stator unit constituting the hub dynamo of the embodiment of the present invention.
Fig. 5 is a side view of the stator unit constituting the hub dynamo of the embodiment of the present invention.
Fig. 6 is a perspective view of a stator constituting the hub dynamo of the embodiment of the present invention.
Fig. 7 is an exploded perspective view of the stator constituting the hub dynamo of the embodiment of the present invention.
Fig. 8 is a perspective view of a coil bobbin of the stator constituting the hub dynamo of the embodiment of the present invention.
Fig. 9 is a perspective view illustrating a state in which a coil is wound around the coil bobbin of the stator constituting the hub dynamo of the embodiment of the present invention.
Fig. 10 is a perspective half-sectional view of the stator constituting the hub dynamo of the embodiment of the present invention.
Fig. 11A is a view of the stator constituting the hub dynamo of the embodiment of the present invention from an axial direction and is a view taken in a direction of arrow EA of Fig. 6.
Fig. 11B is a view of the stator constituting the hub dynamo of the embodiment of the present invention from an axial direction and is a view taken in a direction of arrow EB of Fig. 6.
Fig. 12 is a view of one pair of yokes and a coil bobbin from the axial direction for explaining a disposition angle of a first yoke and a second yoke of the stator constituting the hub dynamo of the embodiment of the present invention.
Fig. 13A is a perspective view illustrating a state before the first yoke and the second yoke of the embodiment of the present invention are combined.
Fig. 13B is a perspective view illustrating a state after the first yoke and the second yoke of the embodiment of the present invention are combined.
Fig. 13C is a view taken in a direction of arrow F in Fig. 13B.
Fig. 14A is a perspective view of one sheet of a plate-shaped member constituting the yoke of the embodiment of the present invention.
Fig. 14B is a perspective view of the yoke formed by laminating the plate-shaped members according to the embodiment of the present invention.
Fig. 14C is a perspective view of the yoke of the embodiment of the present invention from a connecting part side.
Fig. 15 is a view for explaining a problem of interference between adjacent yokes of the stator constituting the hub dynamo of the embodiment of the present invention.
Fig. 16A is a view for explaining a variation occurring in an air gap due to an obliquely disposed yoke in the embodiment of the present invention.
Fig. 16B is a view illustrating a state in which a position of an outer circumferential edge of each plate-shaped member constituting the yoke is adjusted so that the air gap is made uniform in the embodiment of the present invention.
Fig. 17A is a view illustrating an example in which no gap is formed on a contact surface when the first yoke and the second yoke of the embodiment of the present invention are in contact with each other in a one-to-one relationship.
Fig. 17B is a view illustrating a comparative example illustrating that there is a likelihood of a gap being formed on the contact surface when the first yoke and the second yoke according to the embodiment of the present invention are in contact with each other in a one-to-two relationship.
Fig. 18 is an explanatory view of the number of disposed yokes of the hub dynamo in the embodiment of the present invention and is a view illustrating a state at the time of 100% output in which all the first yokes and second yokes are deployed.
Fig. 19 is an explanatory view of the number of disposed yokes of the hub dynamo in the embodiment of the present invention and is a view illustrating a state at the time of 75% output in which the first yokes and the second yokes are thinned out by 25%.
Fig. 20 is an explanatory view of the number of disposed yokes of the hub dynamo in the embodiment of the present invention and is a view illustrating a state at the time of 50% output in which the first yokes and the second yokes are thinned out by 50%.
Fig. 21A is an explanatory view illustrating an effect of the hub dynamo of the embodiment of the present invention as compared with a comparative example and is a view illustrating the number of required yokes at the time of 50% output.
Fig. 21B is an explanatory view illustrating an effect of the hub dynamo of the embodiment of the present invention as compared with the comparative example and is a view illustrating the number of required yokes at the time of 50% output in a case of the comparative example.
Fig. 21C is an explanatory view illustrating an effect of the hub dynamo of the embodiment of the present invention as compared with a comparative example and is a view illustrating the number of required yokes at the time of 25% output.
Fig. 21D is an explanatory view illustrating an effect of the hub dynamo of the embodiment of the present invention as compared with the comparative example and is a view illustrating the number of required yokes at the time of 25% output in the case of the comparative example.

### [Description of Embodiments]

Next, an embodiment of the present invention will be described with reference to the drawings.

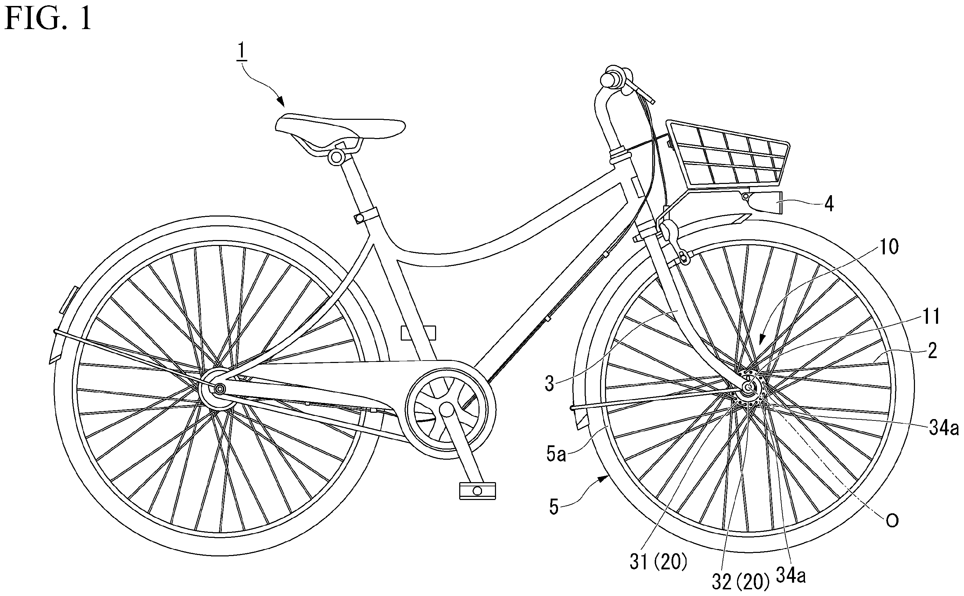

Fig. 1 is a schematic attachment view of a hub dynamo 10. In the following description, a case in which the hub dynamo 10 according to the present invention is attached to a hub axle 11 of a bicycle 1 and supplies electric power to a headlamp 4 of the bicycle 1 will be described. As a lamp, a filament type bulb is not used, and an LED lamp is used for this headlamp 4.

### (Attachment mode of hub dynamo)

As illustrated in Fig. 1, a front wheel 5 of the bicycle 1 is rotatably supported by a front fork 3 constituting a portion of a frame via a hub axle 11. Both sides of the hub axle 11 are non-rotatably fastened and fixed to the front fork 3 by a nut (not illustrated) or the like. The hub dynamo 10 is coaxially attached to the hub axle 11 over a major portion thereof at a center in an axial direction of the hub axle 11. The hub dynamo 10 is provided to supply electric power to the headlamp 4 disposed on a side of the front wheel 5.

The hub dynamo 10 includes a rotor 20 (to be described below) and a stator 101 (to be described below). The rotor 20 is connected to spokes 2 of the front wheel 5 and rotates together with the front wheel 5 around the hub axle 11. The stator 101 is non-rotatably attached to the hub axle 11 in a state of being positioned on an inner circumferential side of the rotor 20.

Hereinafter, an axial direction of a central axis O of the hub axle 11 is simply referred to as an axial direction, a direction perpendicular to the axial direction is referred to as a radial direction, and a direction around the central axis O is referred to as a circumferential direction. A male screw part (not illustrated) for fixing the hub dynamo 10 to the front fork 3 is formed at a portion of the hub axle 11 on an outer side in the axial direction with respect to a portion in which at least the stator 101 (to be described below) is attached.

### (Rotor)

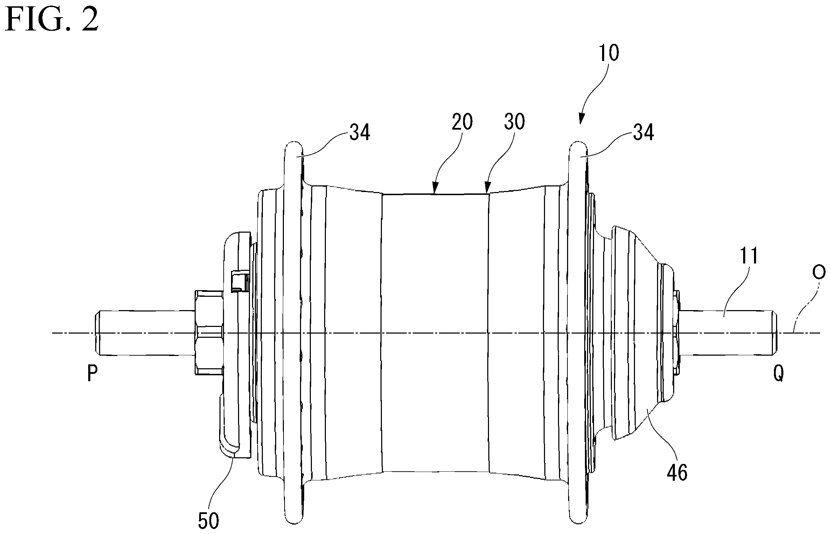

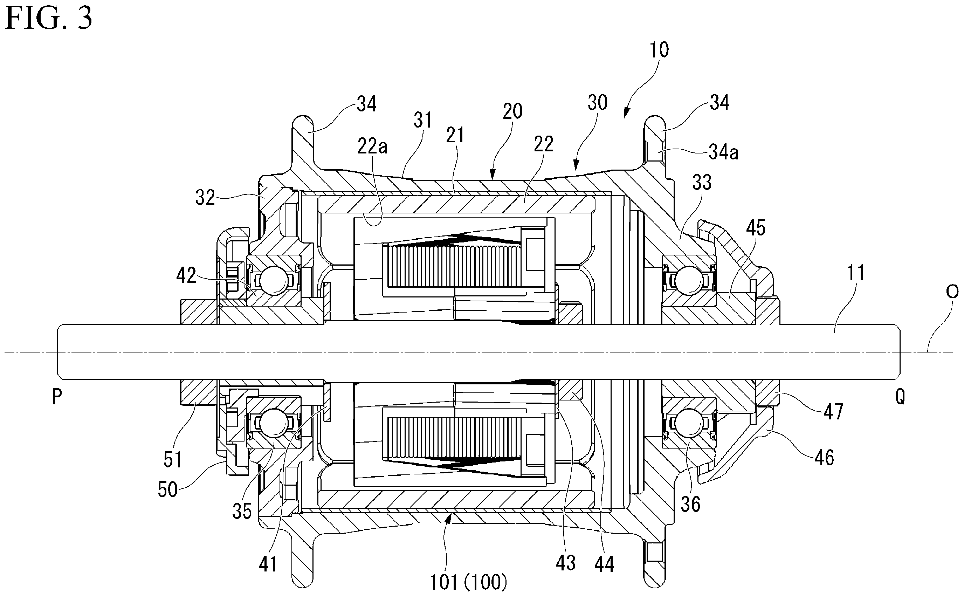

Fig. 2 is a side view of the hub dynamo 10. Fig. 3 is a cross-sectional view of the hub dynamo 10.

As illustrated in Figs. 2 and 3, the rotor 20 is constituted mainly by a hub shell 30. The hub shell 30 includes a second end plate 33 and a first end plate 32. The second end plate 33 is disposed at a cylindrical body part (cylinder part) 31 integrally molded as a substantially bottomed cylindrical shape and on the other axial side Q (right side in Fig. 3) of the cylinder part 31. The first end plate 32 closes an opening on one axial side P of the body part 31 (left side in Fig. 3). The first end plate 32 is press-fitted and fixed to the body part 31.

A flange part 34 protruding toward a radial outer side is formed on an outer circumference on one axial side P and the other axial side Q of the hub shell 30. A plurality of support holes 34a penetrating in the axial direction are formed at regular intervals in the circumferential direction in each flange part 34. As illustrated in Fig. 1, inner end portions of the plurality of spokes 2 extending from a rim 5a of the front wheel 5 to an inner diameter side are engaged with the support holes 34a. The support holes 34a of the left and right flange parts 34 are disposed in a phase-shifted manner in the circumferential direction at a half pitch.

Outer rings of bearings (axle bearing) 35 and 36 are respectively fitted to inner circumferences of the first end plate 32 and the second end plate 33. The rotor 20 mainly constituted by the hub shell 30 is rotatably supported by the hub axle 11 via the bearings 35 and 36. Thereby, the rotor 20 rotates around the hub axle 11 together with rotation of the front wheel 5. That is, the rotor 20 functions as a hub that rotatably supports the front wheel 5.

A permanent magnet 22 formed of, for example, ferrite or the like is disposed on an inner circumference of the body part 31 of the hub shell 30 with a cylindrical ring yoke 21 therebetween. The ring yoke 21 is made of a magnetic metal material (for example, iron). When the ring yoke 21 is made of, for example, iron, the hub shell 30 can be made of aluminum to reduce a weight. The permanent magnet 22 is disposed in a state of being in close contact with an inner circumference of the ring yoke 21. The permanent magnet 22 is affixed with an adhesive or the like. When the permanent magnet 22 is disposed in a cylindrical shape along an inner circumferential surface of the body part 31, the permanent magnet 22 covers the entire outer circumferential surface of the stator 101.

The permanent magnet 22 is incorporated in the inner circumference of the body part 31 of the hub shell 30 in a state in which it is divided into a plurality of sections in the circumferential direction. On an inner circumferential surface of the permanent magnet 22 disposed in a cylindrical shape, N pole and S pole magnetic poles are alternately magnetized at regular intervals in the circumferential direction. The permanent magnet 22 faces outer circumferential portions of a first yoke 120A and a second yoke 120B to be described below.

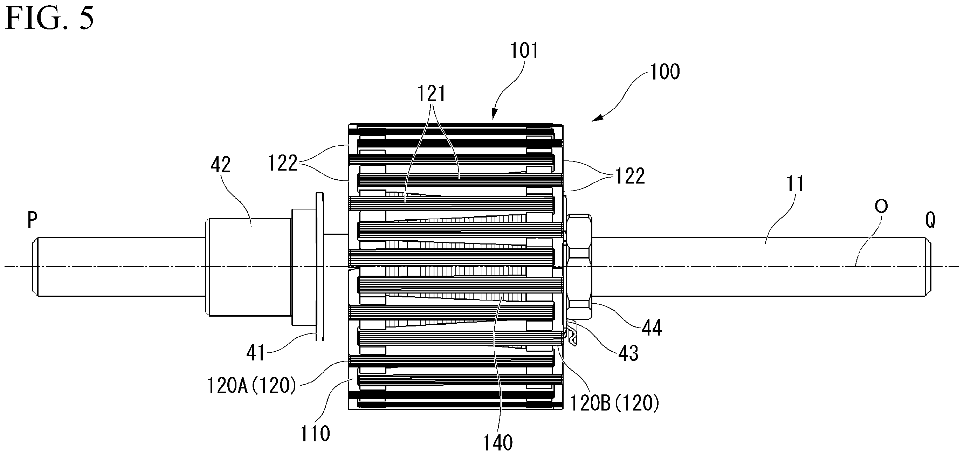

A large-diameter portion is formed at an intermediate portion in the axial direction of the hub axle 11. The stator 101 is attached to an outer circumference of the large-diameter portion. As illustrated in Figs. 3 to 5, the stator 101 is positioned and fixed to the hub axle 11 by a sleeve nut 42 and a fastening nut 44 via plate members 41 and 43 disposed at both axial end portions thereof. The hub axle 11, the stator 101, and the like constitute a stator unit 100.

An inner ring of one side bearing 35 is fitted to an outer circumference of the sleeve nut 42 disposed on one axial side P of the stator unit 100. A connector 50 is provided on an outer side of the bearing 35 in the axial direction. A nut 51 is disposed on an outer side of the connector 50 in the axial direction. When the nut 51 is screwed to the hub axle 11, the connector 50 is fixed to the hub axle 11 and one end side of the hub shell 30 is rotatably supported by the hub axle 11 via the bearing 35.

Another sleeve nut 45 is disposed on the other axial side Q of the hub axle 11. An inner ring of the other side bearing 36 is fitted to an outer circumference of the sleeve nut 45. A cover 46 is provided on an outer side of the bearing 36 in the axial direction. A nut 47 is disposed on an inner circumferential portion of the cover 46. When the nut 47 is screwed to the hub axle 11, the cover 46 is fixed to the hub axle 11 and the other end side of the hub shell 30 is rotatably supported by the hub axle 11 via the bearing 36.

### (Stator)

Next, details of the stator 101 will be described.

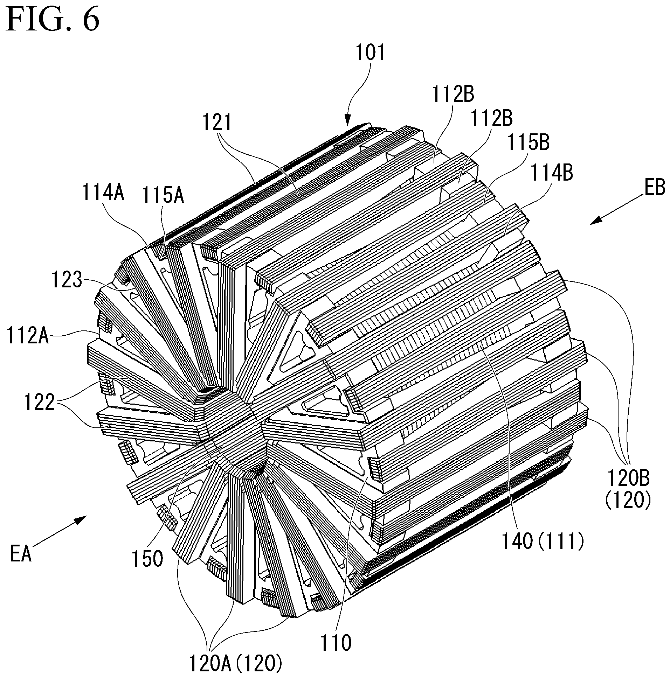

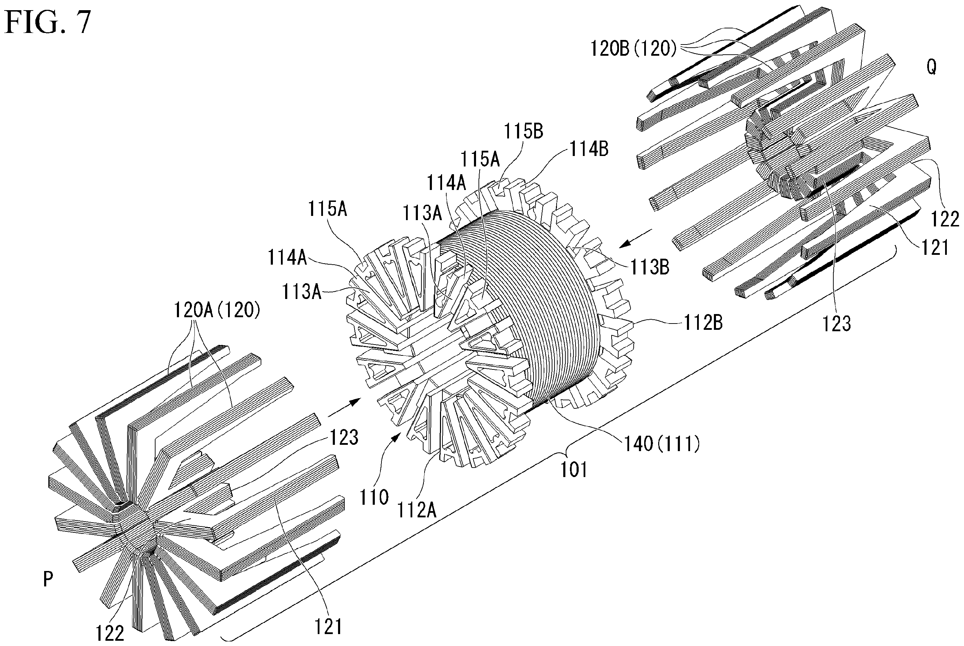

Fig. 6 is a perspective view illustrating a configuration of the stator 101. Fig. 7 is an exploded perspective view illustrating a configuration of the stator 101.

As illustrated in Figs. 6 and 7, the stator 101 is constituted by a cylindrical coil bobbin 110, a ring-shaped coil 140, and a claw-pole type stator core 120. The coil bobbin 110 is made of a synthetic resin (made of a non-magnetic material) through which the hub axle 11 is inserted. The coil 140 is wound around the coil bobbin 110. The stator core 120 is assembled to surround the coil 140 inside. The hub axle 11, the coil bobbin 110, the first yoke 120A, and the second yoke 120B are coaxially disposed.

Here, as elements constituting the claw-pole type stator core 120, a plurality of first yokes 120A are disposed on one axial side P. A plurality of second yokes 120B are disposed on the other axial side Q. The plurality of first yokes 120A and the plurality of second yokes 120B are radially disposed at regular intervals in the circumferential direction and are alternately disposed to be aligned in the circumferential direction. Then, the outer circumferential portion of each of the yokes 120A and 120B is configured to face an inner circumferential surface 22a (see Fig. 3) of the permanent magnet 22 with a slight gap (air gap) therebetween.

The number of the yokes 120A and 120B (the number of poles) may be in relation to the number of magnetic poles of the permanent magnet 22. In the present embodiment, a total of 32 pieces including 16 pieces of the first yokes 120A and 16 pieces of the second yokes 120B are provided at regular intervals. Although not illustrated, a wiring is connected to the coil 140. The wiring is drawn out to the outside along the hub axle 11.

### (Coil bobbin)

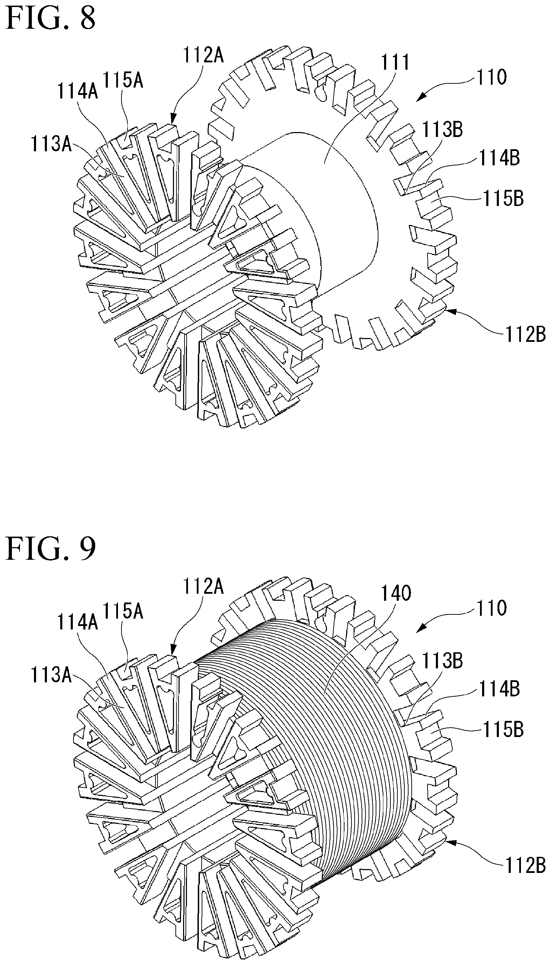

Fig. 8 is a perspective view of the coil bobbin. Fig. 9 is a perspective view illustrating a state in which the coil is wound around the coil bobbin.

As illustrated in Figs. 8 and 9, the coil bobbin 110 includes a body part 111, a first flange 112A, and a second flange 112B. The coil 140 is wound around an outer circumference of the body part 111. The first flange 112A and the second flange 112B are each provided to protrude toward a radial outer side on an outer circumference of an end portion on one axial side P and on the other axial side Q of the body part 111.

A guide groove 113A is provided on an outer end surface in the axial direction of the first flange 112A. An engaging groove 114A communicating with the guide groove 113A is provided on an outer circumferential surface of the first flange 112A at a position corresponding to the guide groove 113A. The guide groove 113A and the engaging groove 114A are for positioning and attaching the first yoke 120A to the coil bobbin 110.

A guide groove 113B is provided on an outer end surface in the axial direction of the second flange 112B. An engaging groove 114B communicating with the guide groove 113B is provided on an outer circumferential surface of the second flange 112B at a position corresponding to the guide groove 113B. The guide groove 113B and the engaging groove 114B are for positioning and attaching the second yoke 120B to the coil bobbin 110.

On the outer circumferential surface of the first flange 112A and the outer circumferential surface of the second flange 112B, support grooves 115A and 115B respectively positioned in the middle of the engaging grooves 114A and in the middle of the engaging grooves 114B in the circumferential direction and configured to respectively support distal ends of the second yoke 120B and the first yoke 120A on the opposite side are provided. That is, since the first yoke 120A and the second yoke 120B are alternately disposed at regular intervals in the circumferential direction, a circumferential position of the engaging groove 114A of the first flange 112A matches a circumferential position of the support groove 115B of the second flange 112B, and a circumferential position of the engaging groove 114B of the second flange 112B matches a circumferential position of the support groove 115A of the first flange 112A. Details of the guide grooves 113A and 113B, the engaging grooves 114A and 114B, the support grooves 115A and 115B will be described below.

### (Yoke)

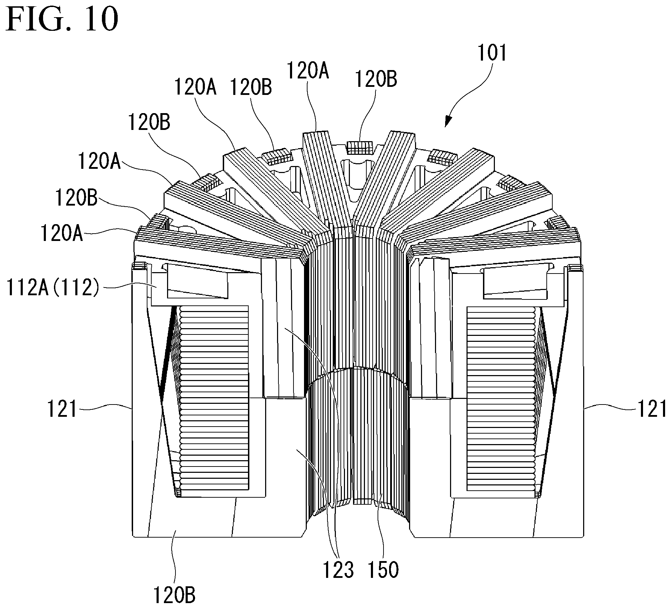

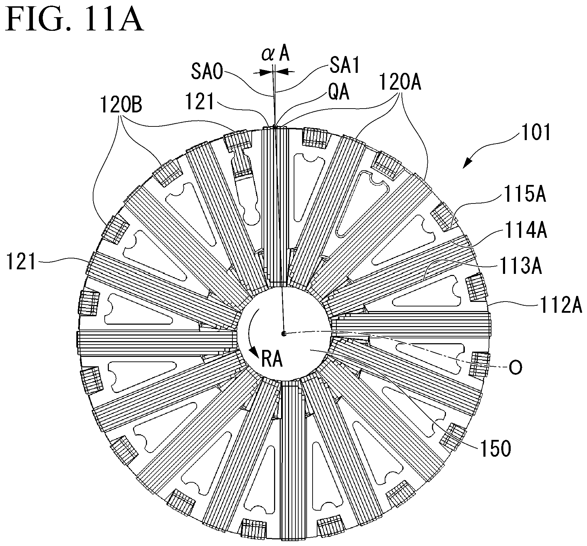

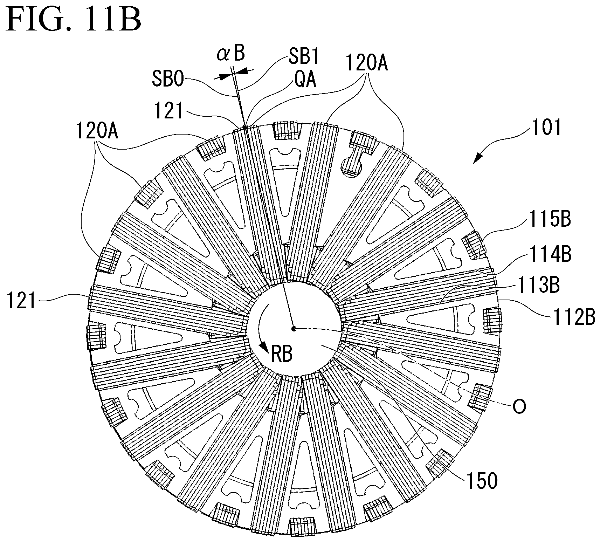

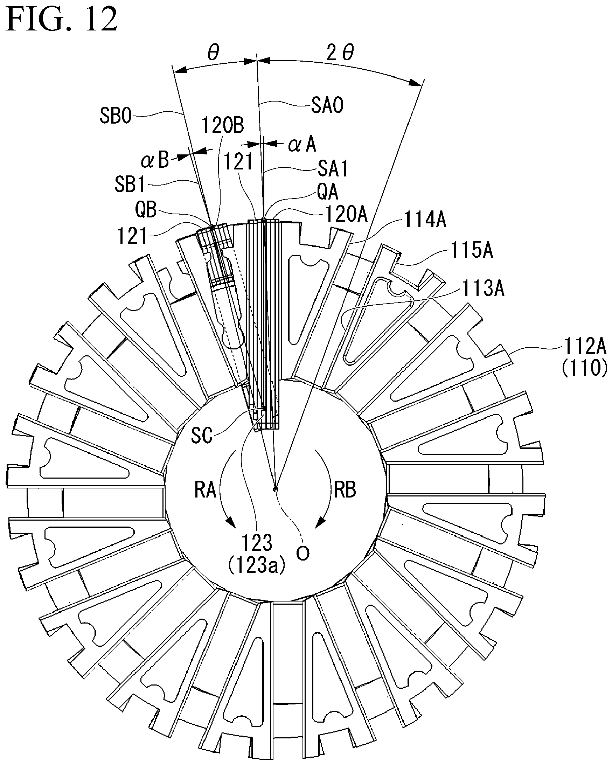

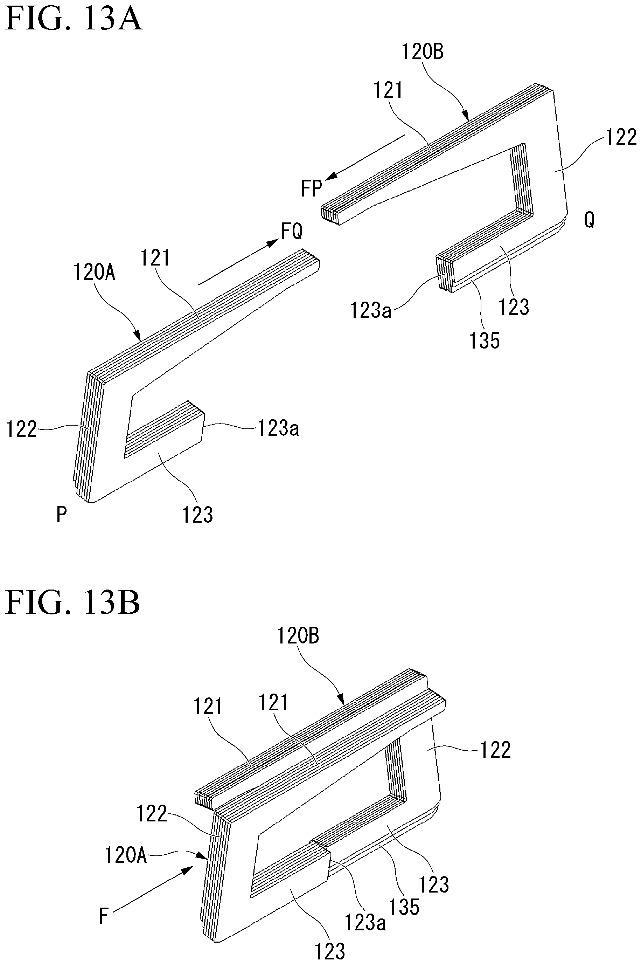

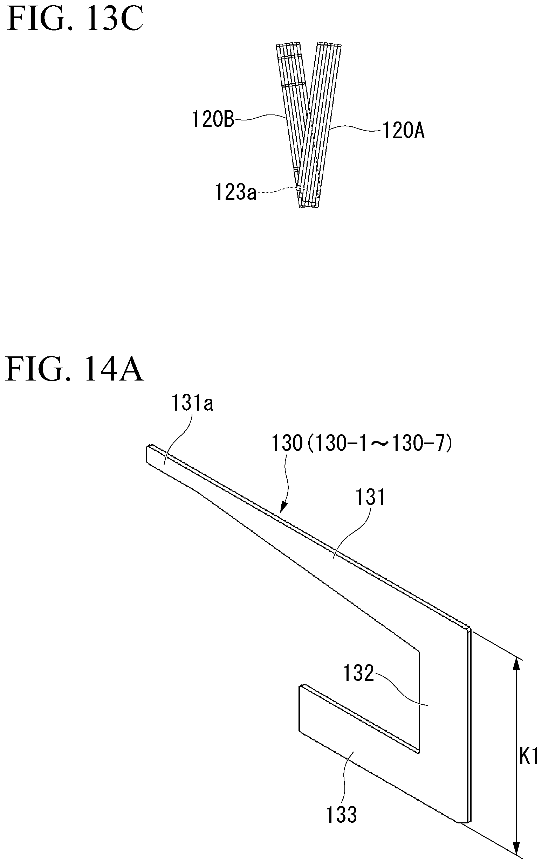

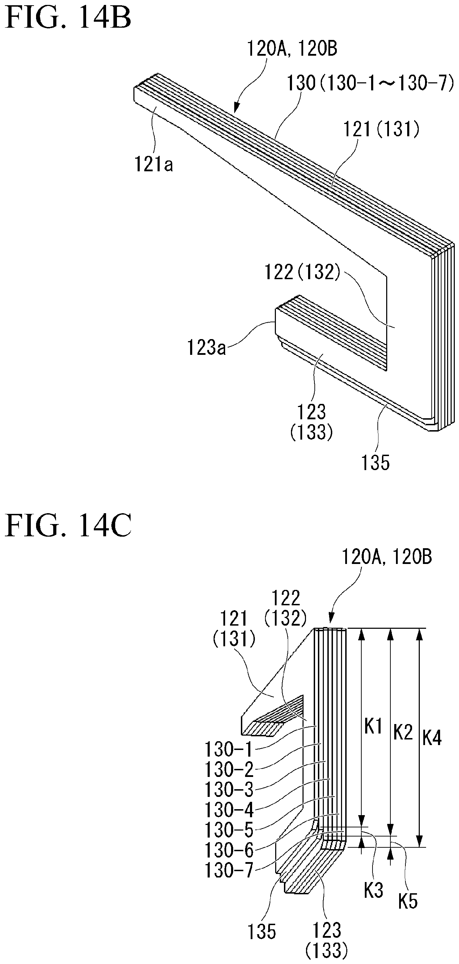

Fig. 10 is a perspective half-sectional view of the stator. Fig. 11A is a view of the stator from an axial direction and is a view taken in a direction of arrow EA of Fig. 6. Fig. 11B is a view of the stator from an axial direction and is a view taken in a direction of arrow EB of Fig. 6. Fig. 12 is a view of one pair of the yokes and the coil bobbin from an axial direction for explaining a disposition angle of the first yoke and the second yoke of the stator. Fig. 13A is a view for explaining a disposition angle of the first yoke and the second yoke and is a perspective view illustrating a state before the first yoke and the second yoke are combined. Fig. 13B is a view for explaining a disposition angle of the first yoke and the second yoke and is a perspective view illustrating a state after the first yoke and the second yoke are combined. Fig. 13C is a view for explaining a disposition angle of the first yoke and the second yoke and is a view taken in a direction of arrow F of Fig. 13B. Fig. 14A is a view for explaining a configuration of each yoke and is a perspective view of one sheet of a plate-shaped member constituting the yoke. Fig. 14B is a view for explaining a configuration of each yoke and is a perspective view of the yoke formed by laminating the plate-shaped members. Fig. 14C is a view for explaining a configuration of each yoke and is a perspective view of the yoke from a connecting part side.

As illustrated by an example of the combination of a pair of the first yoke 120A and the second yoke 120B in Figs. 13A to 13C, the first yoke 120A and the second yoke 120B have the same structure and are formed in a C shape in a side view except that respective directions of assembly with respect to the coil bobbin 110 are opposite to each other.

That is, as illustrated in Figs. 13A to 13C and FIG. 7, the first yoke 120A includes an outer circumferential side magnetic pole part 121, an inner circumferential side magnetic pole part 123, and a connecting part 122. The outer circumferential side magnetic pole part 121 is positioned on an outer circumference side of the coil 140 and a distal end thereof reaches from one axial end side (P side) to the other axial end side (Q side) of the coil 140. The inner circumferential side magnetic pole part 123 is positioned on an inner circumference side of the coil 140 and a distal end 123a reaches from one axial end side (P side) to an intermediate position toward the other axial end side (Q side) of the coil 140. The connecting part 122 linearly extends in the radial direction at one axial end side (P side) of the coil 140 and connects base ends of the outer circumferential side magnetic pole part 121 and the inner circumferential side magnetic pole part 123.

The second yoke 120B includes an outer circumferential side magnetic pole part 121, an inner circumferential side magnetic pole part 123, and a connecting part 122. The outer circumferential side magnetic pole part 121 is positioned on the outer circumference side of the coil 140 and a distal end thereof reaches from the other axial end side (Q side) to one axial end side (P side) of the coil 140. The inner circumferential side magnetic pole part 123 is positioned on an inner circumference side of the coil 140 and a distal end thereof reaches from the other axial end side (Q side) to an intermediate position toward one axial end side (P side) of the coil 140. The connecting part 122 linearly extends in the radial direction at the other axial end side (Q side) of the coil 140 and connects base ends of the outer circumferential side magnetic pole part 121 and the inner circumferential side magnetic pole part 123.

A radial outer circumferential edge of the outer circumferential side magnetic pole part 121 is disposed substantially parallel to the hub axle 11. The outer circumferential side magnetic pole part 121 is formed in a tapered shape such that a radial inner circumferential edge approaches the radial outer circumferential edge toward the distal end. At a distal end portion of the outer circumferential side magnetic pole part 121, the radial inner circumferential edge and the radial outer circumferential edge are parallel to each other. That is, the radial inner circumferential edge of the outer circumferential side magnetic pole part 121 is obliquely formed to a certain point from the base end toward the distal end and then is formed parallel to the radial outer circumferential edge at the distal end portion. A radial inner circumferential edge and a radial outer circumferential edge of the inner circumferential side magnetic pole part 123 are formed parallel to the outer circumferential edge of the outer circumferential side magnetic pole part 121.

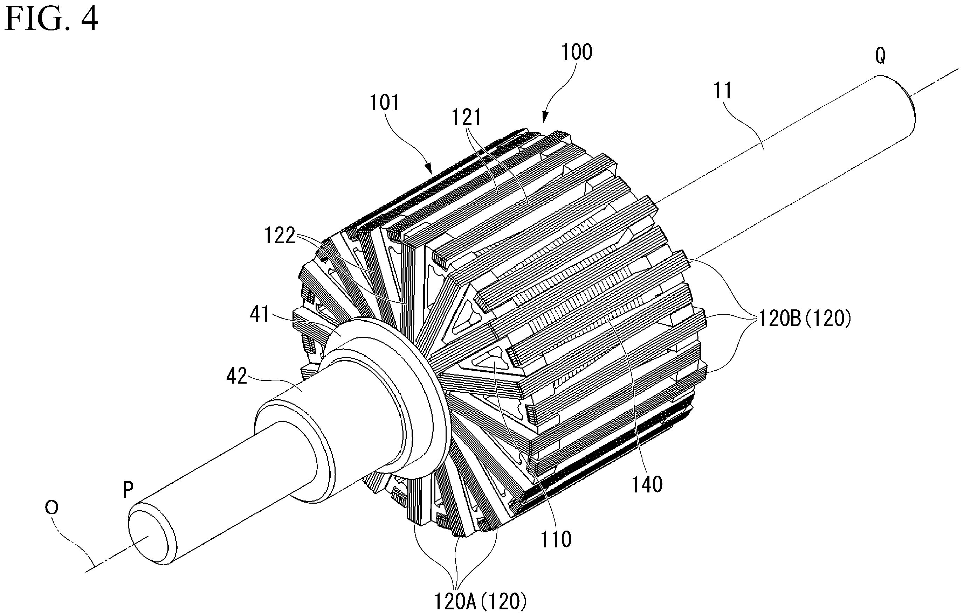

As illustrated in Fig. 10, the inner circumferential side magnetic pole part 123 of each of the yokes 120A and 120B is inserted into an inner circumference of the coil bobbin 110 to be positioned on the inner circumferential side of the coil 140 and is positioned between an inner circumferential surface of the body part 111 of the coil bobbin 110 and an outer circumferential surface of the hub axle 11. Then, the hub axle 11 penetrates and is fixed to a stator central hole 150 (see Fig. 11) surrounded by the inner circumferential side magnetic pole parts 123 of the yokes 120A and 120B disposed close to each other in the circumferential direction (see Fig. 4).

### (Plate-shaped member)

As illustrated in Figs. 14A to 14C, each of the first yoke 120A and the second yoke 120B is formed as a laminated yoke (laminated body) in which a plurality of flat plate-shaped members 130 made of a magnetic material such as iron are laminated in a plate thickness direction (a direction perpendicular to the radial direction of the coil 140). As a material of the plate-shaped member 130 (also referred to as a laminated plate-shaped member), for example, a silicon steel sheet (more specifically, a non-oriented silicon steel sheet) having an oxide film formed on a surface thereof is employed. These plate-shaped members 130 are formed by punching a plate with a press or the like. The plate-shaped member 130 is not subjected to a bending process in forming the yokes 120A and 120B and is formed as a flat plate body.

As illustrated in Fig. 14A, each plate-shaped member 130 is substantially C-shaped piece of iron. The plate-shaped member 130 includes an outer circumferential side magnetic pole part 131 and an inner circumferential side magnetic pole part 133 which form two corresponding sides and a connecting part 132 which is one side connecting the two corresponding sides.

A basic shape of each of the plate-shaped member 130 is the same. As illustrated in Figs. 14B and 14C, the outer circumferential side magnetic pole part 121 of each of the yokes 120A and 120B is constituted by the outer circumferential side magnetic pole parts 131 of the plate-shaped members 130 by laminating a predetermined number of plate-shaped members 130 in a plate thickness direction. The inner circumferential side magnetic pole part 123 of each of the yokes 120A and 120B is constituted by the inner circumferential side magnetic pole parts 133 of the plate-shaped members 130. The connecting part 122 of each of the yokes 120A and 120B is constituted by the connecting parts 132 of the plate-shaped members 130. In this example, each of the yokes 120A and 120B is formed by laminating seven plate-shaped members 130.

As illustrated in Fig. 7, the first yoke 120A and yoke 120B are assembled radially to the coil bobbin 110 when viewed in the axial direction such that the outer circumferential side magnetic pole parts 121 are formed on an outer diameter side. The first yoke 120A and the second yoke 120B are alternately disposed to be aligned in the circumferential direction at regular intervals (in this example, central angle = 360°/32).

As illustrated in Figs. 11 to 13, it is important here that each of the yokes 120A and 120B is disposed not simply on a plane in the radial direction but on a plane inclined with respect to the radial direction (an actual disposition plane of the yoke to be described below).

As described above, the first yoke 120A and the second yoke 120B are aligned alternately in the circumferential direction and radially disposed when viewed from a center of the coil 140. Accordingly, when the first yoke 120A and the second yoke 120B are simply disposed on the plane in the radial direction, positions of the inner circumferential side magnetic pole parts 123 of the first yoke 120A and the second yoke 120B adjacent to each other are deviated in the circumferential direction. Then, the inner circumferential side magnetic pole parts 123 of the first yoke 120A and the second yoke 120B adjacent to each other cannot be magnetically connected one to one.

Therefore, the first yoke 120A and the second yoke 120B are disposed on a plane inclined with respect to the radial direction. That is, as illustrated in Figs. 11A, 11B, and 12, first, when each of the yokes 120A and 120B is disposed, a disposition position QA of the first yoke and a disposition position QB of the second yoke are alternately on the outer circumferential surface of the stator 101 at intervals in the circumferential direction (θ = 11.25° = 360°/32).

Next, as illustrated in Figs. 11A and 12, a plane including the central axis O of the hub axle and a circumferential center QA (hereinafter referred to as a first yoke disposition position QA) of an outer circumferential surface of the outer circumferential side magnetic pole part 121 of the first yoke 120A may be a first yoke disposition reference plane SA0. In addition to this, a plane parallel to the central axis O of the hub axle including the first yoke disposition position QA and inclined to one circumferential side RA by an angle αA with respect to the first yoke disposition reference plane SA0 may be a first yoke actual disposition plane SA1. Then, the first yoke 120A is disposed on the first yoke actual disposition plane SA1.

As illustrated in FIGS. 11B and 12, a plane including the central axis O of the hub axle and a circumferential center QB (hereinafter referred to as a second yoke disposition position QB) of an outer circumferential surface of the outer circumferential side magnetic pole part 121 of the second yoke 120B is may be a second yoke disposition reference plane SB0. In addition to this, a plane parallel to the central axis O of the hub axle including the second yoke disposition position QB and inclined to the other circumferential side RB by an angle αB with respect to the second yoke disposition reference plane SB0 may be a second yoke actual disposition plane SB1. The second yoke 120B is disposed on the second yoke actual disposition plane SB1.

In this case, since an interval between the disposition position QA of the first yoke 120A and the disposition position QB of the second yoke 120B adjacent to each other is θ = 11.25° (= 360°/32), the inclination angles αA and αB of the first yoke actual disposition plane SA1 and the second yoke actual disposition plane SB1 with respect to the respective disposition reference planes SA0 and SB0 are less than αA = αB = 5.625° (= 11.25°/2) and may be, for example, 5°.

Then, when the yokes 120A and 120B are combined on an intersection line SC (see Fig. 12) of the first yoke actual disposition plane SA1 and the second yoke actual disposition plane SB1 as illustrated by arrows FP and FQ in Fig. 13A, the distal end 123a of the inner circumferential side magnetic pole part 123 of the first yoke 120A and the distal end 123a of the inner circumferential side magnetic pole part 123 of the second yoke 120B are brought into contact with each other as illustrated in Figs. 13B and 13C. Thereby, the inner circumferential side magnetic pole part 123 of the first yoke 120A and the inner circumferential side magnetic pole part 123 of the second yoke 120B are magnetically connected in a one-to-one relationship.

From the relationship in which each of the yokes 120A and 120B is disposed on the plane inclined with respect to the radial direction (the actual disposition planes SA1 and SB1 of the yokes), the following can be said.

That is, as illustrated in Figs. 11 and 12, the guide grooves 113A and 113B of the first flange 112A and the second flange 112B of the coil bobbin 110 are also formed such that extending directions thereof have the same inclination angles αA and αB with respect to the radial direction, respectively.

Also, the engaging grooves 114A and 114B are formed to follow inclinations of the guide grooves 113A and 113B. Regarding the support grooves 115A and 115B respectively accommodating and supporting the distal ends of the outer circumferential side magnetic pole parts 121 of the yokes 120A and 120B on the opposite sides, positions thereof in the circumferential direction are formed to have a slight margin so that priority is given to dimensional accuracy of the corresponding engaging grooves 114B and 114A.

In assembling, as illustrated in Fig. 7, the first yoke 120A and the second yoke 120B are alternately inserted into the coil bobbin 110 from one axial side P and the other axial side Q. That is, the connecting part 122 of each of the yokes 120A and 120B is fitted into each of the guide grooves 113A and 113B of the first flange 112A and the second flange 112B of the coil bobbin 110. The base ends of the outer circumferential side magnetic pole parts 121 of the yokes 120A and 120B are respectively fitted into the engaging grooves 114A and 114B of the first flange 112A and the second flange 112B of the coil bobbin 110.

The distal ends of the outer circumferential side magnetic pole parts 121 of the yokes 120A and 120B are respectively accommodated in the engaging grooves 114A and 114B of the second flange 112B and the first flange 112A on the opposite side in the coil bobbin 110. Each of the inner circumferential side magnetic pole part 123 of the yokes 120A and 120B is inserted into the coil bobbin 110 along an inner circumferential surface thereof. The distal ends of the inner circumferential side magnetic pole parts 123 of the yokes 120A and 120B are brought into abutting contact with each other. As a result, the yokes 120A and 120B are mounted to surround the coil 140.

When assembled as described above, the outer circumferential side magnetic pole part 121 of the first yoke 120A and the outer circumferential side magnetic pole part 121 of the second yoke 120B are alternately disposed on the outer circumferential side of the ring-shaped coil 140 wound around the body part 111 of the coil bobbin 110 at intervals in the circumferential direction. Also, the inner circumferential side magnetic pole part 123 of the first yoke 120A and the inner circumferential side magnetic pole part 123 of the second yoke 120B are disposed on the inner circumferential side of the ring-shaped coil 140 wound around the body part of the coil bobbin 110.

At that time, the guide groove 113A of the first flange 112A of the coil bobbin 110 serves the role of positioning the first yoke 120A on the first yoke actual disposition plane SA1. The guide groove 113B of the second flange 112B serves the role of positioning the second yoke 120B on the second yoke actual disposition plane SB1. Then, a plurality of yokes 120A and 120B are held so as not to rotate with respect to the coil bobbin 110.

Next, details of each of the yokes 120A and 120B will be described.

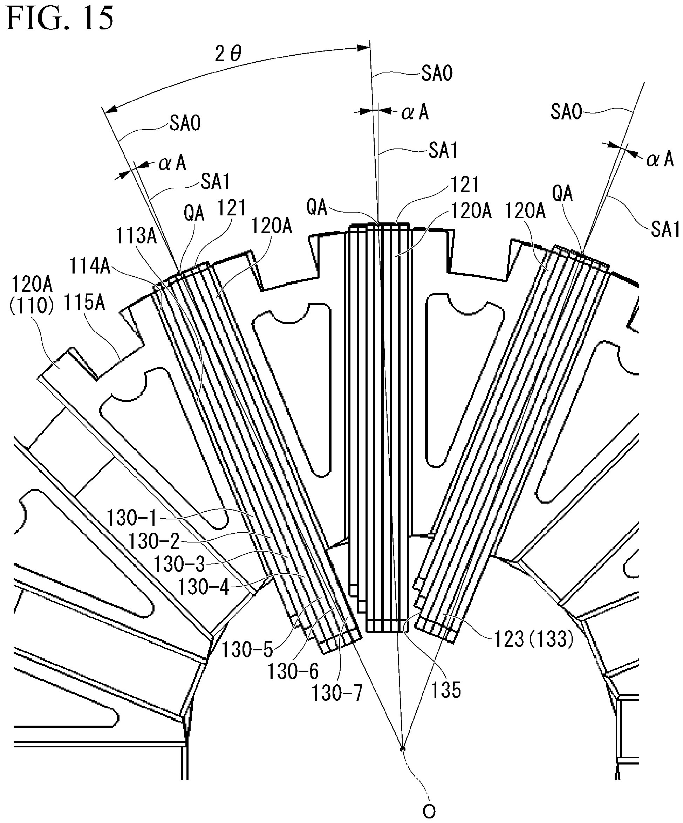

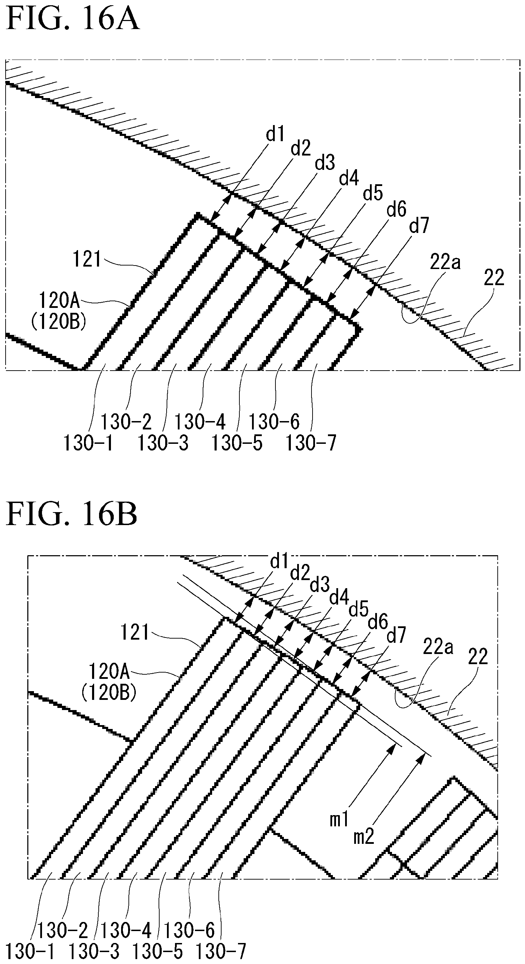

Fig. 15 is a view for explaining a problem of interference between adjacent yokes. Fig. 16A is a view for explaining a problem of an air gap between an outer circumferential edge of each yoke and the inner circumferential surface of the permanent magnet and is a view for explaining a variation occurring in the air gap due to the obliquely disposed yoke. Fig. 16B is a view for explaining a problem of an air gap between the outer circumferential edge of each yoke and the inner circumferential surface of the permanent magnet, and is a view illustrating a state in which a position of an outer circumferential edge of each plate-shaped member constituting the yoke is adjusted so that the air gap is made uniform.

### (Avoidance of interference between inner circumferential ends of adjacent yokes)

As illustrated in Fig. 15, when the yokes 120A and 120B are radially arranged when viewed from the axial direction at intervals in the circumferential direction, the inner circumferential side magnetic pole parts 123 of the adjacent yokes 120A are arranged close to each other and there is a likelihood of interfering with each other. Therefore, in the present embodiment, a notch part 135 is provided on at least one of one end side and the other end side in the circumferential direction of the inner circumferential side magnetic pole part 123 to avoid interference with an inner circumferential end of an adjacent yoke 120A. The same applies to the yoke 120B on the other side.

Here, an inclination direction of the first yoke actual disposition plane SA1 with respect to the disposition reference plane SA0 of the first yoke 120A and an inclination direction of the second yoke actual disposition plane SB1 with respect to the disposition reference plane SB0 of the second yoke 120B are defined as an inclination direction of each yoke. Further, the seven laminated plate-shaped members 130 are illustrated as reference signs 130-1 to 130-7 which are individually distinguished from a front side to a rear side in the inclination direction.

In such a case, dimensions of the laminated plate-shaped members 130 are determined such that a position of an inner circumferential end in the radial direction of a laminated plate-shaped member (for example, the plate-shaped member 130-1) positioned on a front side in the inclination direction of the yoke 120A (120B) is on a radial outer side of a position of an inner circumferential end in the radial direction of a laminated plate-shaped member (for example, the plate-shaped member 130-7) positioned on a rear side in the inclination direction of the yoke 120A (120B).

That is, as illustrated in Fig. 14C, a radial dimension K1 of the plate-shaped member 130-1 positioned at a front end in the inclination direction of the first yoke 120A (120B) may be smaller than a radial dimension K2 of the plate-shaped member 130-2 positioned on a front side following the plate-shaped member 130-1 by a dimension K 3. Also, a radial dimension K2 of the plate-shaped member 130-2 may be smaller than a radial dimension K4 of the plate-shaped members 130-3 to 130-7 positioned on the rear side in the inclination direction of the plate-shaped member 130-2 by a dimension K5.

When the plate-shaped members 130-1 to 130-7 are laminated in this manner, the notch part 135 is secured at the front end in the inclination direction of the inner circumferential end of the inner circumferential side magnetic pole part 123 of the yoke 120A (120B) so that interference with an inner circumferential end of an inner circumferential side magnetic pole part 123 of a yoke 120A (120B) adjacent thereto is avoided.

Further, depending on a likelihood degree of the interference, a radial dimension of the plate-shaped members 130-2 to 130-7 may be the same, and only the radial dimension K1 of the plate-shaped member 130-1 positioned at the foremost end in the inclination direction may be smaller than the radial dimension of the other plate-shaped members 130-2 to 130-7. Also, for example, the radial dimension after the third plate-shaped member 130-3 from the plate-shaped member 130-1 at the foremost end in the inclination direction may also be such that the radial dimension of the plate-shaped member positioned on the rear side in the inclination direction increases from the plate-shaped members 130-3 toward 130-7.

As described above, when the notch part 135 is provided at the inner circumferential end on the front side in the inclination direction of the yoke 120A (120B), interference can be avoided even when the interval between the plurality of yokes 120A (120B) aligned in the circumferential direction is made close to each other. In other words, a large number of yokes 120A (120B) can be disposed by reducing the disposition interval of the yokes 120A (120B).

### (Avoidance of problem in outer circumferential ends of yokes)

Next, a problem in the outer circumferential ends of the yokes 120A and 120B will be described.

As described above, when the yokes 120A and 120B are disposed to be inclined with respect to the radial direction, as illustrated in Fig. 16A, a position of an outer circumferential end in the radial direction of the laminated plate-shaped member (for example, the plate-shaped member 130-7) positioned on the rear side in the inclination direction of the yokes 120A and 120B is formed to be recessed toward a radial inner side with respect to a position of an outer circumferential end in the radial direction of the laminated plate-shaped member (for example, the plate-shaped member 130-1) positioned on the front side in the inclination direction. That is, a gap (air gap) d7 between the outer circumferential end in the radial direction of the laminated plate-shaped member (for example, the plate-shaped member 130-7 at the rear end) and the inner circumferential surface 22a of the permanent magnet 22 at a position on the rear side in the inclination direction is larger than a gap (air gap) d1 between the outer circumferential end in the radial direction of the laminated plate-shaped member (for example, the plate-shaped member 130-1 at the front end) and the inner circumferential surface 22a of the permanent magnet 22 at a position on the front side in the inclination direction. As a result, a deviation occurs in the air gaps d1 to d7. In practice, the gaps (air gaps) d1 to d7 between the outer circumferential ends of the respective plate-shaped members 130-1 to 130-7 and the inner circumferential surface 22a of the permanent magnet 22 satisfy d1 < d2 < d3 < d4 < d5 < d6 < d7.

Therefore, in the present embodiment, as illustrated in Fig. 16B, the position of the outer circumferential end in the radial direction of the laminated plate-shaped member (for example, the plate-shaped member 130-7) positioned on the rear side in the inclination direction of each of the yokes 120A and 120B protrudes outward in the radial direction with respect to the position of the outer circumferential end in the radial direction of the laminated plate-shaped member (for example, the plate-shaped member 130-1) positioned on the front side in the inclination direction of each of the yokes 120A and 120B. Specifically, protruding dimensions of the outer circumferential edges of the outer circumferential side magnetic pole part 121 toward the outer diameter side in each of the yokes 120A and 120B are changed in stages according to the lamination order from a minimum value m1 of the laminated plate-shaped member 130-1 positioned at the front end in the inclination direction of each of the yokes 120A and 120B to a maximum value m2 of the laminated plate-shaped member 130-7 positioned at the rear end in the inclination direction of each of the yokes 120A and 120B. In this manner, the gaps (air gaps) d1 to d7 between the outer circumferential edges of each of the yokes 120A and 120B and the inner circumference of the permanent magnet 22 can be made uniform.

Further, the following method can also be employed as a method of making the position of the outer circumferential end in the radial direction of the laminated plate-shaped member positioned on the rear side in the inclination direction of each of the yokes 120A and 120B protrude outward in the radial direction with respect to the position of the outer circumferential end in the radial direction of the laminated plate-shaped member 130 positioned on the front side in the inclination direction of each of the yokes 120A and 120B. That is, a method in which dimensions of the plate-shaped members 130 laminated on the front side and the rear side in the inclination direction are made different can be employed. A method in which lamination positions of the plate-shaped members 130 laminated on the front side and the rear side in the inclination direction are deviated can be employed.

Next, an operation will be described.

### (Mechanism of power generation)

Power generation of the hub dynamo 10 configured as above is performed as follows.

That is, when the front wheel 5 rotates, the rotor 20 connected to the front wheel 5 by the spokes 2 rotates around the hub axle 11 together with the front wheel 5. Then, the permanent magnet 22 rotates around the stator 101.

Due to a magnetic flux of the rotating permanent magnet 22, a state in which the outer circumferential side magnetic pole part 121 of the first yoke 120A on one axial side P is an N pole and the outer circumferential side magnetic pole part 121 of the second yoke 120B on the other axial side Q is an S pole, and a state in which the outer circumferential side magnetic pole part 121 of the first yoke 120A on one axial side P is an S pole and the outer circumferential side magnetic pole part 121 of the second yoke 120B on the other axial side Q is an N pole are alternately repeated. Thereby, an alternating magnetic flux is generated in the inner circumferential side magnetic pole parts 123 of both the yokes 120A and 120B magnetically connected to each other. Due to the alternating magnetic flux generated on the inner circumference side of the coil, a current is caused to flow through the coil 140 of the stator 101 and thereby power generation is performed.

During this power generation, an eddy current is also generated in addition to the alternating magnetic flux. Although the eddy current causes power generation efficiency to be decreased, since each of the yokes 120A and 120B of the present hub dynamo 10 is configured as a laminated body of a plurality of plate-shaped members 130, generation of the eddy current can be inhibited.

In the hub dynamo of the present embodiment, the first yoke 120A and the second yoke 120B are not disposed on the plane in the radial direction (yoke disposition reference planes SA0 and SB0) but disposed on the plane inclined with respect to the radial direction (yoke actual disposition planes SA1 and SAB1). Therefore, the inner circumferential side magnetic pole part 123 of the first yoke 120A and the inner circumferential side magnetic pole part 123 of the second yoke 120B can be brought into contact with each other in a one-to-one relationship.

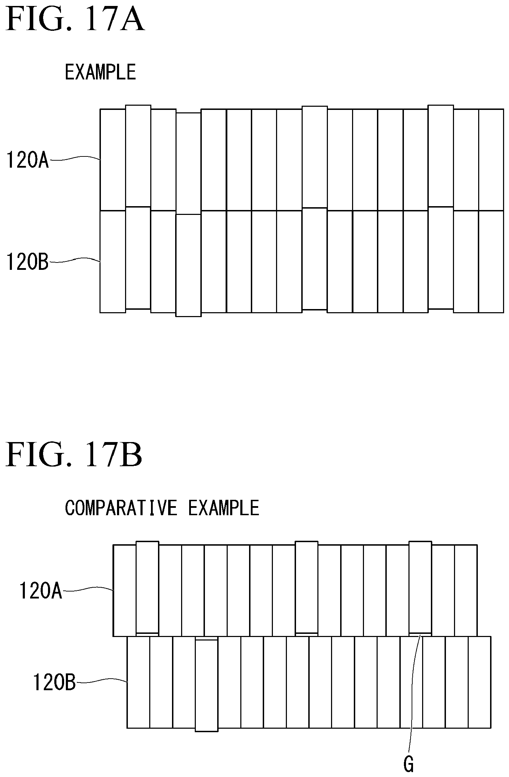

Accordingly, as schematically illustrated in Fig. 17A, a gap G formed on a contact surface between the first yoke 120A and the second yoke 120B due to a variation caused by a dimensional tolerance or the like of the yokes 120A and 120B as illustrated in Fig. 17B can be eliminated, and a degree of close contact of the contact surface can be increased. As a result, magnetic connection of the yokes 120A and 120B can be stabilized, iron loss can be reduced, and efficiency can be improved.

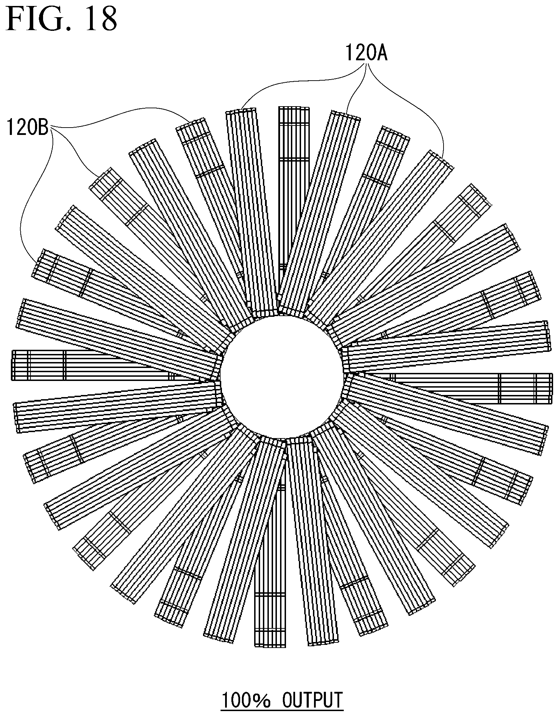

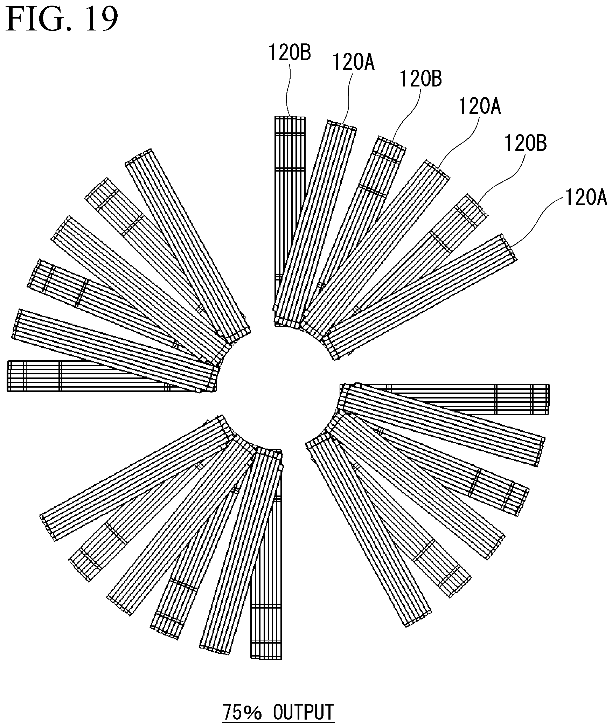

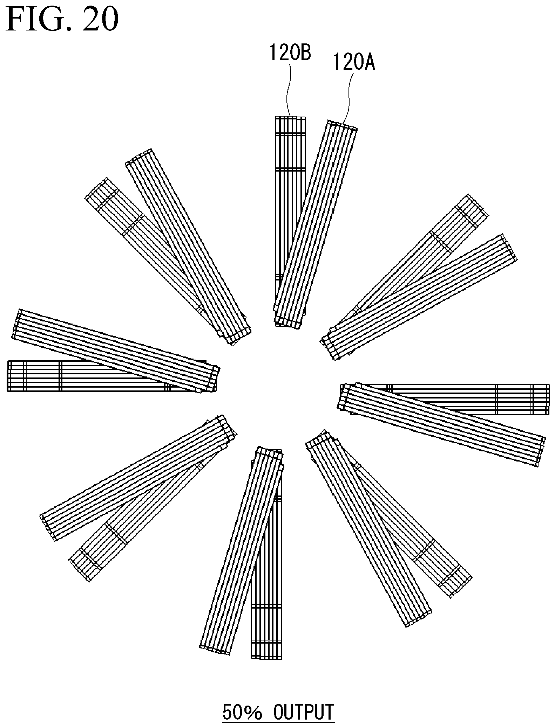

When an output is adjusted downward from a 100% output state illustrated in Fig. 18 in which the entire number of the yokes 120A and 120B of 32 poles is used, the first yoke 120A and the second yoke 120B can be connected one-to-one. Therefore, the number of required yokes 120A and 120B can be reduced. For example, when an output is reduced to 75% from the state of 100% output illustrated in Fig. 18, the number of yokes 120A and 120B need only be simply reduced to 3/4 as illustrated in Fig. 19. When the output is reduced to 50%, as illustrated in FIG. 20, the number of yokes 120A and 120B to be used need only be simply reduced to 1/2.

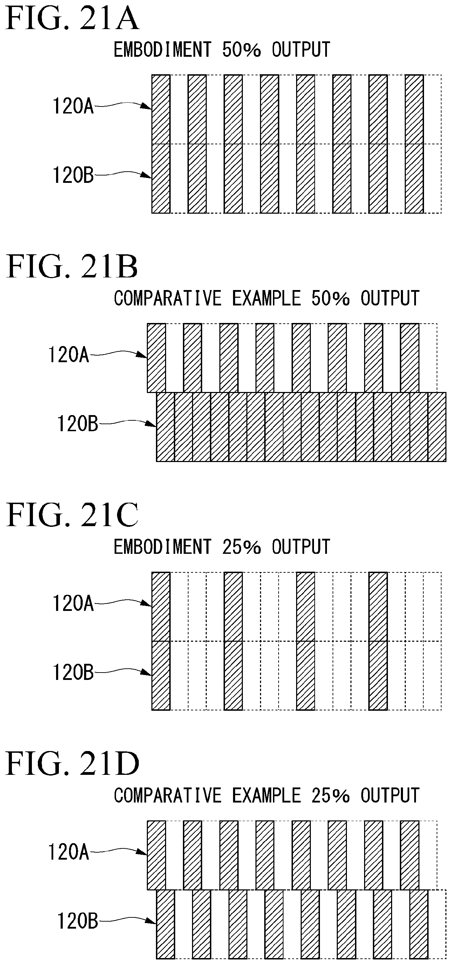

In the case of the embodiment, connection between the first yoke 120A and the second yoke 120B can be made in a one-to-one relationship. Therefore, when an output is adjusted downward from a 100% state to, for example, 50% or 25%, the number of first yokes 120A and second yokes 120B need only be reduced by an equivalent number as illustrated in Figs. 21A and 21C, and the number of required yokes 120A and 120B can be reduced. On the other hand, in a case of a comparative example (an example of a prior publication), it is inevitable to use the entire number of yokes on one side (for example, the second yokes 120B) even at 50% output, and it is inevitable to use half of the entire number of both yokes 120A and 120B even at 25% output. As described above, since the number of required yokes can be reduced at the time of adjusting the output, it is advantageous in terms of cost and weight accordingly.

In the present embodiment, axial end portions of the yokes 120A and 120B are respectively engaged with the guide grooves 113A and 113B and the engaging grooves 114A and 114B of the flanges 112A and 112B of the coil bobbin 110. Therefore, the yoke can be positioned on a plane inclined with respect to the radial direction (yoke actual disposition planes SA1 and SB1). Accordingly, by assembling the yokes 120A and 120B to the coil bobbin 110, a positional relationship between the coil 140 wound around the coil bobbin 110 and the yokes 120A and 120B can be appropriately determined.

In the present embodiment, even when the laminated yoke (the first yoke 120A and the second yoke 120B) is disposed to be inclined with respect to the radial direction, the gap (air gap) between the outer circumferential edge of the yokes 120A and 120B (outer circumferential edge of the outer circumferential side magnetic pole part 121 of each yoke) and the inner circumferential surface 22a of the permanent magnet 22 can be made uniform. As a result, power generation efficiency can be improved.

In the present embodiment, the notch part 135 is provided on at least one of one end side and the other end side in the circumferential direction of the inner circumferential end of each of the yokes 120A and 120B so that interference with an inner circumferential end of a yoke adjacent thereto is avoided. Therefore, interference of the inner circumferential part of each of the yokes 120A and 120B with an inner circumferential part of each of the yokes 120A and 120B adjacent thereto can be avoided, and thus the yokes 120A and 120B can be disposed close to each other in the circumferential direction. Therefore, the number of disposed yokes can be increased.

The present invention is not limited to the above-described embodiment, and includes various modifications added to the above-described embodiment within the scope not deviating from the gist of the present invention.

For example, the number of laminated sheets of the plate-shaped member 130 in constituting the yokes 120A and 120B may be arbitrarily determined. The number of yokes 120A and 120B at the time of 100% output is not limited to 32 yokes. Also, the number of stators 101 is not limited to one, and two or three stators 101 may be disposed on the hub axle 11.

In the above-described embodiment, a case in which the stator unit 100 is constituted by one stator 101 has been described. However, the present invention is not limited thereto, and the stator unit 100 may be constituted by two or more stators 101 disposed to be aligned on the hub axle 11. In this case, it is possible to generate a phase-shifted alternating current by shifting phases of the two stators 101.

### [Reference Signs List]

- 4: Headlamp (light emitting diode)
- 5: Front wheel (wheel)
- 10: Hub dynamo
- 11: Hub axle
- 20: Rotor
- 22: Permanent magnet
- 30: Hub shell
- 31: Body part
- 101: Stator
- 110: Coil bobbin
- 111: Body part
- 112A: First flange
- 112B: Second flange
- 113A: Guide groove (first yoke connecting part guide groove)
- 113B: Guide groove (second yoke connecting part guide groove)
- 114A: Engaging groove (first yoke outer circumferential side guide groove)
- 114B: Engaging groove (second yoke outer circumferential side guide groove)
- 120: Stator core
- 120A: First yoke
- 120B: Second yoke
- 121: Outer circumferential side magnetic pole part
- 122: Connecting part
- 123: Inner circumferential side magnetic pole part
- 123a: Distal end
- 130, 130-1∼130-7: Plate-shaped member
- 135: Notch part
- 140: Coil
- QA: Circumferential center (first yoke disposition position)
- QB: Circumferential center (second yoke disposition position)
- SA0: First yoke disposition reference plane
- SA1: First yoke actual disposition plane
- SB0: Second yoke disposition reference plane
- SB1: Second yoke actual disposition plane
- SC: Intersection line

## Claims

1. A hub dynamo comprising:
a rotor including:
a hub shell rotating together with a wheel; and
a permanent magnet circumferentially disposed in an inner circumference of a body part of the hub shell; and
a stator which is non-rotatably fixed to a hub axle rotatably supporting the wheel, disposed on an inner circumferential side of the permanent magnet in a state of being accommodated inside the hub shell, and including a ring-shaped coil that outputs an alternating current due to rotation of the rotor, wherein
the stator includes a plurality of first yokes and a plurality of second yokes as a stator core disposed on one axial side and the other axial side to surround the ring-shaped coil, radially disposed at intervals in a circumferential direction, and alternately disposed in the circumferential direction, wherein
each of the first yokes includes:
an outer circumferential side magnetic pole part which is positioned on an outer circumferential side of the coil and whose distal end reaches from one axial end side to the other axial end side of the coil;
an inner circumferential side magnetic pole part which is positioned on an inner circumferential side of the coil and whose distal end reaches from one axial end side to an intermediate position toward the other axial end side of the coil; and
a connecting part linearly extending at one axial end side of the coil and connecting base ends of the outer circumferential side magnetic pole part and the inner circumferential side magnetic pole part, and
each of the second yokes includes:
an outer circumferential side magnetic pole part which is positioned on an outer circumferential side of the coil and whose distal end reaches from the other axial end side to one axial end side of the coil;
an inner circumferential side magnetic pole part which is positioned on an inner circumferential side of the coil and whose distal end reaches from the other axial end side to an intermediate position toward one axial end side of the coil; and
a connecting part linearly extending at the other axial end side of the coil and connecting base ends of the outer circumferential side magnetic pole part and the inner circumferential side magnetic pole part,
the first yoke and the second yoke are formed as a laminated yoke in which a plurality of flat plate-shaped members made of a magnetic material are laminated,
the first yoke and the second yoke are disposed such that a disposition position of the first yoke and a disposition position of the second yoke are alternately on an outer circumferential surface of the stator at intervals in the circumferential direction,
a plane including a central axis of the hub axle and a circumferential center on an outer circumferential surface side of the outer circumferential side magnetic pole part of the first yoke is as a first yoke disposition reference plane and a plane inclined to one circumferential side with respect to the first yoke disposition reference plane is a first yoke actual disposition plane so that the first yoke is disposed on the first yoke actual disposition plane,
a plane including the central axis of the hub axle and a circumferential center on an outer circumferential surface side of the outer circumferential side magnetic pole part of the second yoke is a second yoke disposition reference plane and a plane inclined to the other circumferential side with respect to the second yoke disposition reference plane is a second yoke actual disposition plane so that the second yoke is disposed on the second yoke actual disposition plane, and
the distal end of the inner circumferential side magnetic pole part of the first yoke and the distal end of the inner circumferential side magnetic pole part of the second yoke are in contact with each other on an intersection line of the first yoke actual disposition plane and the second yoke actual disposition plane.

2. The hub dynamo according to claim 1, wherein
the stator includes a coil bobbin made of a non-magnetic material, wherein
the coil bobbin has:
a cylindrical body part around which the coil is wound; and
a first flange and a second flange provided on outer circumferences of both axial ends of the body part,
a guide part with which one axial end portion of the first yoke is engaged to position the first yoke on the first yoke actual disposition plane is provided on the first flange, and
a guide part with which the other axial end portion of the second yoke is engaged to position the second yoke on the second yoke actual disposition plane is provided on the second flange.

3. The hub dynamo according to claim 2, wherein the guide part includes:
a first yoke connecting part guide groove provided on an axial end portion of the first flange and to which the connecting part of the first yoke is fitted so that the first yoke is positioned on the first yoke actual disposition plane; and
a second yoke connecting part guide groove provided on an axial end portion of the second flange and to which the connecting part of the second yoke is fitted so that the second yoke is positioned on the second yoke actual disposition plane.

4. The hub dynamo according to claim 2 or 3, wherein the guide part includes:
a first yoke outer circumferential side guide groove provided on an outer circumferential surface of the first flange and to which the outer circumferential side magnetic pole part of the first yoke is fitted so that the first yoke is positioned on the first yoke actual disposition plane; and
a second yoke outer circumferential side guide groove provided on an outer circumferential surface of the second flange and to which the outer circumferential side magnetic pole part of the second yoke is fitted so that the second yoke is positioned on the second yoke actual disposition plane.

5. The hub dynamo according to any one of claims 1 to 4, wherein, when an inclination direction of the first yoke actual disposition plane with respect to the first yoke disposition reference plane and an inclination direction of the second yoke actual disposition plane with respect to the second yoke disposition reference plane are respectively defined as inclination directions of the yokes, a position of an outer circumferential end in the radial direction of the laminated plate-shaped member positioned on a rear side in the inclination direction of each of the first yoke and the second yoke protrudes outward in the radial direction with respect to a position of an outer circumferential end in the radial direction of the laminated plate-shaped member positioned on a front side in the inclination direction of each of the first yoke and the second yoke.

6. The hub dynamo according to any one of claims 1 to 5, wherein a notch part is provided on at least one of one end side and the other end side in the circumferential direction of an inner circumferential end of the first yoke and the second yoke to avoid interference with an inner circumferential end of another first yoke and second yoke adjacent thereto in the circumferential direction.
